# EUROPÄISCHE PATENTSCHRIFT

(11) **EP 0 591 354 B1**
(45) Veröffentlichungstag und Bekanntmachung des Hinweises auf die Patenterteilung: **03.09.1997**
(21) Anmeldenummer: 92913678.6
(22) Anmeldetag: 26.06.1992
(51) Int. Cl.: A22C 17/12

(54) **ENTHÄUTUNGS- UND ABSCHWARTMASCHINE**
FLAYING AND SKINNING MACHINE
MACHINE A ECORCHER ET A DECOUENNER

(30) Priorität: 27.06.1991 DE 4121282
(43) Veröffentlichungstag der Anmeldung: 13.04.1994
(73) Patentinhaber: Maja-Maschinenfabrik Hermann Schill GmbH, 77694 Kehl (DE)
(72) Erfinder: SCHILL, Alfred, D-7640 Kehl-Goldscheuer (DE)
(74) Vertreter: Schuster, Gregor, Dipl.-Ing.
(86) Internationale Anmeldenummer: DE9200532
(87) Internationale Veröffentlichungsnummer: WO9300014

(56) Entgegenhaltungen:
- EP-A- 0 391 112
- DE-A- 3 409 933
- DE-A- 3 837 181
- DE-B- 1 267 133
- DE-B- 2 844 241
- DE-C- 3 126 009
- FR-A- 2 086 688
- FR-A- 2 427 789
- FR-A- 2 618 367

## Beschreibung

Die Erfindung geht aus von einer Enthäutungs- und Abschwartmaschine nach der Gattung des Hauptanspruchs. Eine dem Oberbegriff von Anspruch 1 entsprechende Vorrichtung ist aus FR-A-24 27 789 bekannt. Bei einer weiteren bekannten gattungsgemäßen Enthäutungs- und Abschwartmaschine (DE-OS 38 37 181) wird durch das Zusammenwirken von der Oberflächenverzahnung der Zugwalze, der Schneidklinge aber auch dem mit bestimmtem Abstand seiner Hohlfläche angeordneten Klingenbalken eine gute Enthäutung erzielt. Bei dieser bekannten Maschine sind auf der Zugwalze jedoch Ringnuten angeordnet in die zur Reinigung der Zugwalzenoberfläche Zinken eines Reinigungskammes greifen. Konstruktionsbedingt ist dadurch die Verzahnungsoberfläche um die durch die Ringnuten beanspruchte Oberfläche verringert.

Entsprechend ist auch der Wirkungsgrad beim Enthäuten verringert, da die Zugwalze im wesentlichen die Vorschubfunktion beim Enthäuten übernimmt. Während der Reinigungskamm bei dieser bekannten Maschine im wesentlichen Haut- und Gewebeteile von der Zugwalzenoberfläche entfernt, dient zur Reiniung von Fett und weniger zusammenhängenden Teilen eine Reinigungswalze, deren Verzahnung jener der Zugwalze entspricht und wobei beide Verzahnungen ineinander greifen, so daß in der Längsverzahnung der Zugwalzenoberfläche vorhandene Teilchen ähnlich wie bei einer Mangel, insbesondere in die Ringnuten herausgequetscht werden. Die Reinigungswalze ist in Drehrichtung der Zugwalze dem Reiniungskamm nachgeschaltet. Obwohl der Reinigungskamm die wesentlichen Hautteile entfernt, werden durch das Kämmen der Verzahnungen von Zugwalze und Reinigungswalze bei manchen Fleischarten Fett- und Gewebefolien gebildet, die auf der Oberfläche der Reinigungswalze festgepreßt sind und deren Reinigungsfunktion an der Zugwalze beeinträchtigen.

Bei einer anderen bekannten Enthäutungsmaschine (FR 70 12 414) wirkt mit der Zugwalze eine Abstreifwalze zusammen, deren Oberfläche ebenfalls verzahnt ist, ohne daß diese Verzahnung in jene der Zugwalze greift und wobei Zugwalze und Abstreifwalze die gleiche Drehrichtung aufweisen, so daß an den nahe einander gegenüberliegenden Oberflächen von Zugwalze und Abstreifwalze eine hohe Relativgeschwindigkeit entsteht. Die Abstreifwalze übernimmt die abgetrennten Haut- und Gewebeteile in ausreichendem Maße. Nicht jedoch können Fett- und Feinmaterialien hierdurch entfernt werden, so daß zusätzlich ein Gebläse eingesetzt wird, um solche Teile von der Oberfläche der Zugwalze wegzublasen mit all den dabei gegebenen Nachteilen.

### Vorteile der Erfindung

Die erfindungsgemäße Enthäutungs- und Abschwartmaschine mit den kennzeichnenden Merkmalen des Hauptanspruchs hat demgegenüber den Vorteil, daß die Zugwalze für die Enthäutungsaufgabe die gesamte Oberfläche zur Verfügung hat, da keine Ringnuten mehr erforderlich sind. Durch die in der Anordnung ansich bekannte Abstreifwalze werden die zusammenhängenden Stücke wie Haut- und Gewebeteile von der Zugwalzenoberfläche entfernt. Die nachgeschaltete Reinigungswalze greift sodann mit ihrer Verzahnung in jene der Zugwalzenoberfläche ein und preßt dort vorhandene Fett- und Feinteile heraus. Durch den an dieser Oberfläche eingreifenden Reinigungskamm werden sich dort bildende Folien von der Oberfläche der Reinigungswalze entfernt, so daß diese mit weitgehend gereinigten Zähnen in die verschmutzte Zugwalze eingreift. Auf der Reinigungswalze bewirken die Ringnuten nur eine unerhebliche Verschlechterung der Reinigungswirkung. Der Gesamtwirkungsgrad der erfinderischen Enthäutungs- und Abschwartmaschine ist jedoch gegenüber den bekannten Maschinen wesentlich verbessert.

Nach einer vorteilhaften Ausgestaltung der Erfindung verlaufen die scharfkantigen Wülste auf der Oberfläche der Abstreifwalze schraubenförmig. Eine solche schraubenförmige Anordnung ist ansich bekannt durch die oben genannte Maschine (FR-PS 70 12 414). Durch den leicht schraubenförmigen Verlauf wird das Abpellen der Häute von der Zugwalze erleichtert, da daß Abpellen einseitig an der Walze beginnt, um sich dann auf die Länge der Walze auszubreiten.

Nach einer weiteren vorteilhaften Ausgestaltung der Erfindung weisen die scharfkantigen Wülste auf der Abstreifwalze einen sägezahnförmigen Querschnitt auf mit einer in Drehrichtung weisenden steilen Frontflanke, einer kurzen tangentialen Radialflanke und einer flacher verlaufenden Rückseitenflanke, die radial innen an der nachfolgenden Frontflanke endet. Durch diese sägezahnförmige Gestaltung und in Verbindung mit dem nur geringen Abstand des tangentialen Radialflankenabschnitts dieser Wülste zur Oberfläche, bzw. zur Verzahnung der Zugwalze hin wird vermieden, daß die von der Zugwalze abzupellenden Haut- und Gewebeteile zwischen die beiden Walzen gelangen. Vorzugsweise kann die Abstreifwalze in ansich bekannter Weise (FR-PS 70 12 414) mit einer höheren Drehzahl laufen als die Zugwalze.

Nach einer weiteren vorteilhaften Ausgestaltung der Erfindung können die Reinigungswalze und/oder der Reinigungskamm verschiebbar und/oder ausschwenkbar sein, um dadurch die Maschine besser reinigen zu können. So ist es gemäß der Erfindung möglich, daß die Reinigungswalze und/oder der Reinigungskamm auf einer mit der Tischplatte verschwenkbaren Tischtragevorrichtung angeordnet, wodurch in Ausschwenkstellung der Tischtragevorrichtung die Reinigungswalze von der Zugwalze getrennt ist. Die Tischtragevorrichtung ist mit ihrer Schwenkanordnung in ansich bekannter Weise (DE-OS 38 37 181) an dem Maschinengehäuse gelagert.

Nach einer vorteilhaften Ausgestaltung der Erfindung ist die Tischplatte entgegen der Fleischtransportrichtung zurück- bzw. herausziehbar um in einfacher Weise von oben an die Walzen heranzukommen. Ebenfalls kann in ansich bekannter Weise der Klingenbalken mit Schneidklinge an einer Schwenkvorrichtung angeordnet sein, die ebenfalls am Maschinengehäuse gelagert ist oder auch entsprechend die Zugwalze oder die Abstreifwalze.

Nach einer weiteren vorteilhaften Ausgestaltung der Erfindung ist der Reinigungskamm relativ zur Reinigungswalze für seinen Ein- und Ausgriff in ansich bekannter Weise verschwenkbar, wobei das Schwenklager an der Tischtragevorrichtung angeordnet ist. Die Ausschwenkung des Reinigungskamms kann erfindungsgemäß auch unabhängig von der Verschwenkung der Tischplatte erfolgen. Dadurch daß der Reinigungskamm aufgrund der Drehrichtung der Reinigungswalze (entgegengesetzt jener der Zugwalze) auf der der Zugwalze abgewandten Seite der Reinigungswalze angeordnet sein kann, besteht eine gute Zugänglichkeit; jedenfalls wesentlich besser als bei der bekannten Enthäutungsmaschine (DE-OS 38 37 181).

Weitere Vorteile und vorteilhafte Ausgestaltungen der Erfindung sind der nachfolgenden Beschreibung der Zeichnung und den Ansprüchen entnehmbar.

### Zeichnung

Ein Ausführungsbeispiel des Gegenstandes der Erfindung ist in der Zeichnung dargestellt und im folgenden näher beschrieben. Es zeigen:
- Fig. 1: eine vereinfachte Seitenansicht der wesentlichen Maschinenteile unter Weglassung der Seitenwand,
- Fig. 2: eine Vergrößerung des Ausschnitts II aus Fig. 1,
- Fig. 3: das Walzenwerk gemäß Ansicht III in Fig. IV und
- Fig. 4: das Walzenwerk gemäß Ansicht IV in Fig. 3

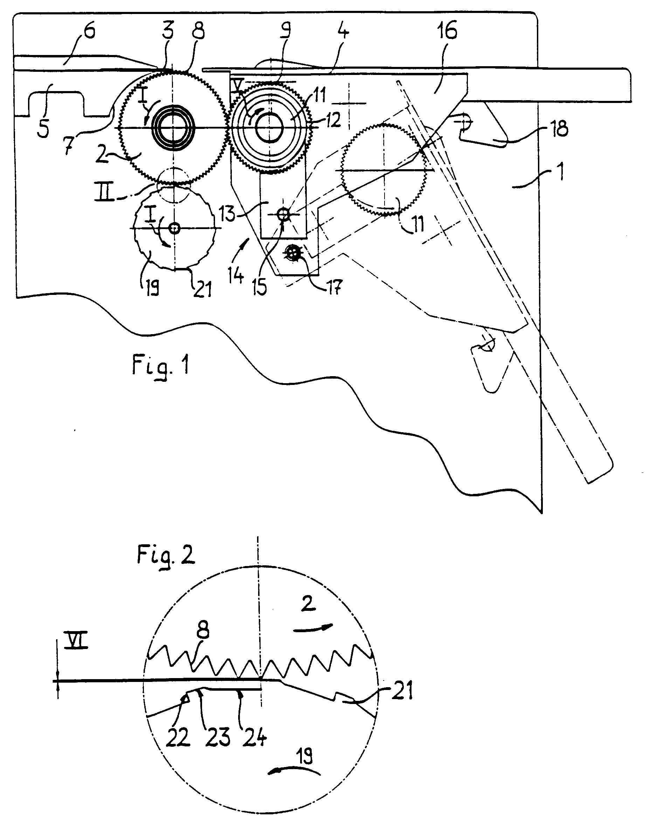

Bei der in Fig. 1 sehr vereinfacht und nur mit den wesentlichen Teilen gezeigten Enthäutungs- und Abschwartmaschine ist in einem Gehäuse 1 eine Zugwalze 2 gelagert, die in Drehrichtung I durch nicht dargestellte Mittel angetrieben wird und die mit einer Schneidklinge 3 zusammenwirkt, um Fleisch zu enthäuten oder abzuschwarten, welches über eine Tischplatte 4 manuell in Richtung Schneidklinge 3 zugeführt wird. Die Schneidklinge 3 ist an einem Klingenbalken 5 durch eine Halteleiste 6 festgespannt. Der Klingenbalken 5 weist zur Zugwalze 2 hin eine tonnenförmige Hohlfläche 7 auf, wobei dieser Abstand zwischen Hohlfläche 7 und Oberfläche der Zugwalze 2 für den Transport der vom Fleisch abgezogenen Häute von Bedeutung ist. Entscheidend jedoch ist für die Enthäutung die auf der Oberfläche der Zugwalze 2 angeordnete Verzahnung 8 mittels der, und aufgrund der Drehrichtung I der Zugwalze, die abzuziehenden Häute bzw. Sehnen und Schwarten an der Schneidklinge 3 vorbeigezogen werden. Die Zahnflanken dieser sich über die Länge der Zugwalze 2 erstreckenden Verzahnung 8 sind gradflächig und verhältnismäßig steil.

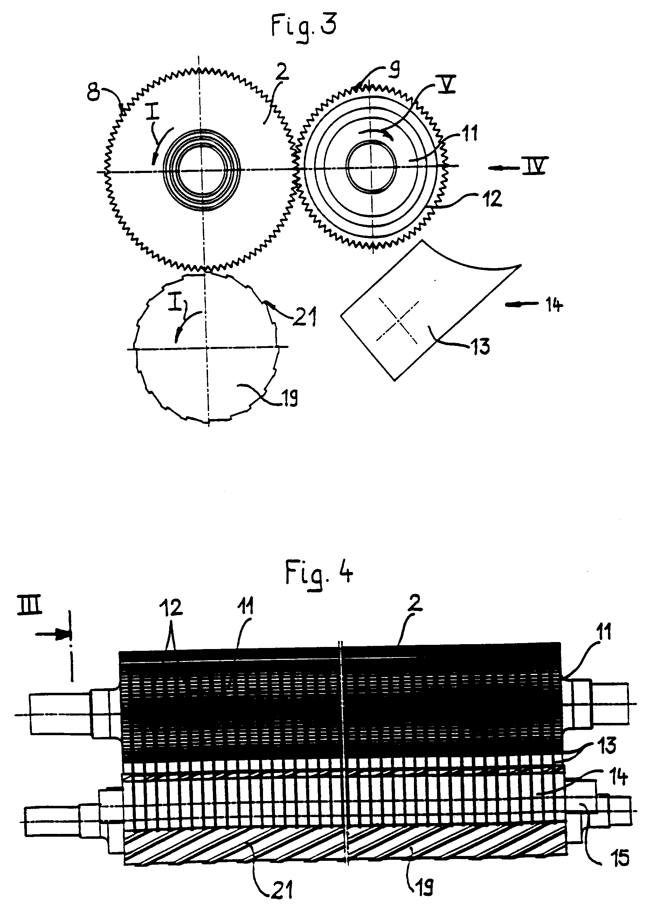

Mit dieser Verzahnung 8 der Zugwalze 2 kämmt eine Verzahnung 9 auf der Oberfläche einer Reinigungswalze 11, wobei sich diese Verzahnung ebenfalls auf die Länge der Reinigungswalze 11 erstreckt, jedoch durch Ringnuten 12 unterbrochen ist in welche die Zinken 13 eines Reinigungskammes 14 greifen. Auf diese Weise wird sich von der Zugwalze 2 auf die Reinigungswalze 11 übertragenes und dort verdichtetes Material herausgekämmt, da bei dem Ineinandergreifen der Verzahnungen 8 und 9 solches Material weitgehend in die Ringnuten verdrängt wird. Der Reinigungskamm 14 ist auf einer Achse 15 gelagert und kann wie in Fig. 3 dargestellt ausgeschwenkt werden. Die Achse 15 ist wiederum auf einer im Gehäuse 1 gelagerten Tischtragevorrichtung 16 angeordnet, auf der die Tischplatte 4 angeordnet ist und die Reinigungswalze 11 gelagert ist und welche um eine im Gehäuse 1 gelagerte Achse 17 schwenkbar ist, beispielsweise in die in Fig. 1 strichpunktiert dargestellte Ausschwenklage. In dieser Ausschwenklage besteht ein guter Zugang zu Zugwalze 2 und Reinigungswalze 11, beispielsweise um die Maschine reinigen zu können. Die Tischtragevorrichtung 16 wird durch einen Riegel 18 in der jeweiligen Schwenkstellung gehalten.

Im Gehäuse 1 ist als weiteres eine Abstreifwalze 19 gelagert, die in gleicher Drehrichtung I wie die Zugwalze 2 angetrieben ist, und zwar vorzugsweise mit einer höheren Drehzahl. Diese Abstreifwalze 19 weist auf ihrer Oberfläche eine scharfkantige Wülste 21 mit sägezahnförmigem Querschnitt auf, wie sie in Fig. 2 in vergrößerten Maßstab entsprechend dem Ausschnitt II aus Fig. 1 gezeigt ist. Zudem verlaufen diese sägezahnförmigen Wülste 21 schraubenförmig über die Länge der Abstreifwalze 19 so wie es Fig. 4 entnehmbar ist.

Die sägezahnförmigen Wülste 21 weisen jeweils eine steile, fast radial verlaufende Frontflanke 22 eine kurze tangentiale Radialflanke 23 und eine flacher verlaufende Rückseitenflanke 24 auf. Zwischen der Radialflanke 23 und der Rückseitenflanke 24 ist ein weicher abgerundeter Übergang. Der Abstand VI zwischen der Verzahnung 8 der Zugwalze 2 und den Sägezahnwülsten 21 der Abstreifwalze 19 ist nur sehr gering, um durch die Abstreifwalze 19 in Verbindung mit deren steilen Frontflanke 22 die Häute und Sehnen von der Zugwalze 2 abzupellen.

In Fig. 3 ist das Dreiwalzensystem mit Zugwalze 2, Reinigungswalze 11 und Abstreifwalze 19 gegenüber Fig. 1 in vergrößertem Maßstab und für sich allein dargestellt. Diese Ansicht entspricht jener Ansicht III in Fig. 4. Außerdem ist hier der Reinigungskamm 14 mit Zinken 13 in ausgeschwenktem Zustand dargestellt.

In Fig. 4 ist das Walzensystem in der Seitenansicht dargestellt, gemäß Ansicht IV in Fig. 3. Die Zugwalze 2 ist weitgehend durch die Reinigungswalze 11 verdeckt, so daß nur der obere Bereich erkennbar ist. In der Reinigungswalze 11 sind hier deutlich erkennbar, und zwar auf die ganze Länge der Reinigungswalze 11 verteilt, die Ringnuten 12 angeordnet, in die der Reinigungskamm 14 mit seinen Zinken 13 greift. Zur besseren Erkennbarkeit sind die Zinken 13 als dickere Linien dargestellt. Auch die Abstreifwalze 19 ist teilweise verdeckt, und zwar hier durch die Achse 15 des Reinigungskamms 14. Auf der Abstreifwalze 19 sind die schraubenförmig verlaufenden sägezahnförmigen Wülste 21 erkennbar.

## Patentansprüche

1. Enthäutungs- und Abschwartmaschine
- mit einer von einem Maschinengehäuse (1) getragenen Tischplatte (4) für die Zuführung des zu enthäutenden Fleisches,
- mit einer der Tischplatte (4) zugeordneten Zugwalze (2) deren Oberfläche eine Längsverzahnung (8) quer zur Walzenlaufrichtung (I) für den Fleischtransport aufweist,
- mit einer tangential zur Zugwalze (2) verlaufenden der Fleischtransportrichtung entgegengerichteten Schneidklinge (3),
- mit einem die Schneidklinge (3) tragenden Klingenbalken (5) der eine der Zugwalzenoberfläche mit bestimmtem Abstand zugeordnete und der Führung des Hauttransports dienende Hohlfläche (7) aufweist,
- mit einer Reinigungswalze (11) deren Oberfläche eine der Zugwalzenverzahnung (8) entsprechende Längsverzahnung (9) aufweist, welche in jener der Zugwalze (2) kämmt,
- *mit auf der Oberfläche der Reinigungswalze (11) angeordneten Ringnuten (2) in welchen ein Reinigungskamm (14) mit seinen Zinken (13) zur Reinigung der Walzenoberfläche greift,*
dadurch gekennzeichnet,
- *daß nur die Zugwalze ohne Ringnuten auf der Oberfläche ausgebildet ist,*
- daß parallel zur Zugwalze (2) mit dieser zusammenwirkend und die gleiche Drehrichtung (I) aufweisend eine Abstreifwalze (19) *vorgesehen ist,*
- *daß die Abstreifwalze* in Drehrichtung der Zugwalze (2) gesehen vor der Reinigungswalze (11) *und* nahe der Zugwalze (2) angeordnet ist *und*
- *daß auf der Oberfläche der Abstreifwalze (19) scharfkantige Wülste (21) vorhanden sind.*

2. Enthäutungs- und Abschwartmaschine nach Anspruch 1 dadurch gekennzeichnet, daß die scharfkantigen Wülste (21) auf der Oberfläche der Abstreifwalze (19) schwach schraubenförmig verlaufen.

3. Enthäutungs- und Abschwartmaschine nach Anspruch 1 oder 2, dadurch gekennzeichnet, daß die scharfkantigen Wülste (21) auf der Oberfläche der Abstreifwalze (19) einen sägezahnförmigen Querschnitt aufweisen mit einer in Drehrichtung (I) weisenden steilen Frontflanke, einer kurzen tangentialen Radialflanke und einer flacher verlaufenden Rückseitenflanke.

4. Enthäutungs- und Abschwartmaschine nach einem der vorhergehenden Ansprüche dadurch gekennzeichnet, daß die Reinigungswalze (11) über eine Vorrichtung verschiebbar bzw. ausschwenkbar und so von der Zugwalze (2) trennbar ist.

5. Enthäutungs- und Abschwartmaschine nach einem der hervorgehenden Ansprüche dadurch gekennzeichnet, daß der Reinigungskamm (14) relativ zur Reinigungswalze (11) für seinen Ein- oder Ausgriff verschiebbar oder verschwenkbar ist.

6. Enthäutungs- und Abschwartmaschine nach einem der vorhergehenden Ansprüche dadurch gekennzeichnet, daß die Reinigungswalze (11) und der Reinigungskamm (14) auf einer mit der Tischplatte (4) verschwenkbaren Tischtragevorrichtung (16) angeordnet sind, wodurch in Ausschwenkstellung die Reinigungswalze (11) von der Zugwalze (2) trennbar ist.

7. Enthäutungs- und Abschwartmaschine nach Anspruch 6 dadurch gekennzeichnet, daß das Schwenklager (15) an der Tischtragevorrichtung (16) angeordnet ist.

8. Enthäutungs- und Abschwartmaschine nach einem der vorhergehenden Ansprüche dadurch gekennzeichnet, daß die Tischplatte (4) entgegen der Fleischtransportrichtung zurück- bzw. herausziehbar ist.

## Claims

1. Flaying and skinning machine
- with a table plate (4), supported by a machine casing (1), for the supply of a piece of meat to be skinned,
- with a feed roller (2), related to the table plate (4), whose surface is splined (8) transverse to the roller's diection of rotation (I) in order to feed the meat,
- with a cutting blade (3) running tangentially to the feed roller (2) facing against the meat supply direction,
- with a blade beam (5) bearing the cutting blade (3) and featuring a hollow surface (7) related to the feed roller surface by a certain distance, to guide the main supply,
- with annular tee-slots (12) postitioned on the surface of the cleaning roller (11) into which a cleaning comb (14) engages with its teeth (13) to clean the roller surface,
characterized in that
- only the feed roller is designed without annular tee-slots on ints surface
- and that a stripping roller (19) is provided working in conjunction with and positioned parallel to the feed roller (2), turning with the same sense of rotation,
- and that - seen in the sense of rotation of the feed roller (2) - the stripping roller is positioned before the cleaning roller (11) and near the feed roller (2)
- and that sharp-edged elevations (21) are positioned on the surface of the stripping roller (19).

2. Flaying and skinning machine according to claim 1, characterized in that the sharp-edged elevations (21) on the stripping roller (19) run along the surface in light spirals.

3. Flaying and skinning machine according to claim 1 or 2, characterized in that the sharp-edged elevations (21) on the surface of the stripping roller (19) are of saw-toothed cross-section with a steep front flank pointing in the direction of rotation (I), a short tangential radial flank, and a somewhat flatter back flank.

4. Flaying and skinning machine according to one of the above claims, characterized in that the cleaning roller (11) can be shifted and tilted by an attachment, and thus separated from the feed foller (2).

5. Flaying and skinning machine according to one of the above claims, characterized in that the cleaning comb (14) can be tilted and shifted relative to the cleaning roller (11) for engagement and disengagement.

6. Flaying and skinning machine according to one of the above claims, characterized in that the cleaning roller (11) and the cleaning comb (14) are positioned on a table supporting device (16) that can be tilted relative to the table, thus allowing to separate the cleaning roller (11) from the feed roller (2) in tilted position.

7. Flaying and skinning machine according to claim 6, characterized in that the tilting pivot (15) is attached to the table supporting device (16).

8. Flaying and skinning machine according to one of the above claims, characterized in that the table plate (4) can be drawn back or out against the direction of meat supply.

## Revendications

1. Machine à écorcher et à découenner
- avec un plateau de table (4) porté par un bâti de machine (1), pour l'acheminement de la chair devant être écorchée,
- avec un rouleau de traction (2) associé au plateau de table (4), dont la surface a une denture longitudinale (8), transversale par rapport au sens de rotation (I) des rouleaux, pour le transport de la chair,
- avec une lame de coupe (3) tangente au rouleau de traction (2) et opposée à la direction de transport de la chair,
- avec une barre porte-lame (5) portant la lame de coupe (3) et ayant une surface creuse (7) qui se trouve à une certaine distance de la surface du rouleau de traction et sert à guider le transport de la peau,
- avec un rouleau de nettoyage (11) dont la surface présente une denture longitudinale (9) qui correspond à la denture (8) du rouleau de traction et peigne la denture du rouleau de traction (2),
- avec des rainures annulaires (2) disposées sur la surface du rouleau de nettoyage (11), dans lesquelles un peigne de nettoyage (14) enfonce ses dents (13) pour nettoyer la surface du rouleau,
caractérisée par le fait
- que seul le rouleau de traction est conçu sans rainures annulaires sur la surface,
- qu'un rouleau racleur (19) a été prévu parallèlement au rouleau de traction (2), le rouleau racleur agissant ensemble avec ce dernier et ayant le même sens de rotation (I),
- que le rouleau racleur, vu dans le sens de rotation du rouleau de traction (2), est placé en amont du rouleau de nettoyage (11) et près du rouleau de traction (2),
- et qu'il y a sur la surface du rouleau racleur (19) des renflements (21) à arêtes vives.

2. Machine à écorcher et à découenner selon la revendication 1, caractérisée par le fait que les renflements à arêtes vives (21) ont sur la surface du rouleau racleur (19) un parcours légèrement hélicoïdal.

3. Machine à écorcher et à découenner selon la revendication 1 ou 2, caractérisée par le fait que les renflements à arêtes vives (21) sur la surface du rouleau racleur (19) ont une coupe transversale en dents de scie, avec un flanc frontal raide dans le sens de la rotation (I), un flanc radial tangentiel court et un flanc arrière d'un tracé plus plat.

4. Machine à écorcher et à découenner selon une des revendication précédentes, caractérisée par le fait que le rouleau de nettoyage (11) peut être déplacé ou pivoté à l'aide d'un dispositif et qu'il peut donc être séparé du rouleau de traction (2).

5. Machine à écorcher et à découenner selon une des revendication précédentes, caractérisée par le fait que le peigne de nettoyage (14) peut être déplacé ou pivoté par rapport au rouleau de nettoyage (11) pour le faire rentrer ou sortir.

6. Machine à écorcher et à découenner selon une des revendication précédentes, caractérisée par le fait que le rouleau de nettoyage (11) et le peigne de nettoyage (14) sont disposés sur un dispositif de support de la table (16), pouvant être pivoté avec le plateau de table (4), permettant ainsi en position pivotée de séparer le rouleau de nettoyage (11) du rouleau de traction (2).

7. Machine à écorcher et à découenner selon la revendication 6, caractérisée par le fait que le palier de pivotement (15) est disposé sur le dispositif de support de la table (16).

8. Machine à écorcher et à découenner selon une des revendication précédentes, caractérisée par le fait que le plateau de table (4) peut être retiré ou enlevé dans le sens opposé à la direction de transport de la chair.
